# EUROPEAN PATENT SPECIFICATION

(11) **EP 2 886 370 B1**
(45) Date of publication and mention of the grant of the patent: **22.02.2017**
(21) Application number: 14197666.2
(22) Date of filing: 12.12.2014
(51) Int. Cl.: B60C 1/00, B60C 11/00, B60C 13/00

(54) **TIRE WITH HEAT TRANSFER RUBBER PATHWAY**
REIFEN MIT WÄRMEÜBERTRAGENDEM GUMMILEITUNG
PNEU AVEC CONDUIT EN CAOUTCHOUC DE TRANSFERT DE CHALEUR

(30) Priority: 19.12.2013 US 201314134389
(43) Date of publication of application: 24.06.2015
(73) Proprietor: The Goodyear Tire & Rubber Company, Akron, Ohio 44316 (US)
(72) Inventor: Forciniti, Leandro, Canton, OH Ohio 44720 (US); Meza, Roberto Cerrato, North Canton, OH Ohio 44720 (US); Sandstrom, Paul Harry, Cuyahoga Falls, OH Ohio 44223 (US); Busch, Warren James, North Canton, OH Ohio 44720 (US)
(74) Representative: Kutsch, Bernd

(56) References cited:
- DE-A1-102004 036 517
- US-A1- 2003 234 067

## Description

### Field of the invention

This invention relates to a tire which contains a pathway for transferring heat within a tire comprising a heat transfer rubber conduit composed of at least one operational, physically functional, heat conductive tire component. In one embodiment, for a cured rubber tire, the heat transfer rubber conduit is provided as a pathway for transfer of heat generated within the tire to an external surface of the tire for dissipation of the conducted heat. In another embodiment, for an uncured rubber tire, the heat transfer rubber conduit is provided as a pathway to transfer heat applied to an outer surface of the tire to the interior of the tire. The heat conductive tire component(s) of the heat transfer conduit is/are each comprised of a heat conductive rubber composition containing acetylene carbon black. In one embodiment, the heat transfer rubber conduit is provided as a pathway for conduction of heat to or from a less heat conductive rubber component which adjoins at least one of such heat conductive rubber components.

### Background of the Invention

For a cured rubber tire, particularly a cured pneumatic rubber tire, internal heat is dynamically generated within the tire as it is being worked, or driven, during service. The internal heat generated within the cured rubber tire promotes a rise in an internal temperature within the tire, particularly for a heat generating component and for adjoining components.

It is desired to reduce the presence of such internally generated heat within the tire by creating a pathway to channel the heat to an outer surface of the tire to thereby attenuate, or reduce, the associated rise in internal temperature within the tire.

Such internally generated heat within the tire as it is being worked and a desire to reduce a buildup of such internally generated heat within the tire is well known to those having skill in such art. Often such heat buildup reduction is approached by reducing the generated heat through reduction of hysteresis of the rubber. Here, such heat buildup reduction is approached by creating said pathway, channel or conduit which may, if desired, also include applying a reduction in the hysteresis of a rubber composition of a heat conductive tire component contained in such conduit.

In addition, it is appreciated that uncured pneumatic rubber tires are cured by placing an uncured rubber tire in a suitable mold in which heat and pressure are applied to the tire by the mold to shape and cure the tire. Heat from the hot mold surface applied to the outer surface of the uncured rubber tire is allowed to penetrate and cure the rubber tire.

In practice, it is desired to create a heat conductive pathway to channel heat applied to an outside surface of the tire to the interior of the uncured tire, namely by an internal heat transfer rubber conduit, to promote the curing of the tire from the heat applied to its outer surface.

In practice, it may be readily thought of to provide a thin heat conductive rubber strip which extends through a rubber tire component to an outer surface of a tire or which extends between two or more tire rubber components, for conduction of heat from an internal portion to an outer surface of the tire or for conduction of heat from an outer surface of a tire to its internal portion.

However, use of such thin rubber strip adds little, if any, to performance of the tire itself and may reduce one or more desirable physical properties of a tire component with which it is associated or joined.

In contrast, for the purposes of this invention, it is desired to provide a directional path of heat conductivity without use of such thin heat conductive rubber strip, and, instead, to rely on at least one tire operational component, or a plurality of sequentially connected or joined tire components, to provide a directional heat conductive path to extend within the tire to an outer surface of the tire and to thereby channel the heat.

Such combination of sequentially connected heat conductive tire operational components to create a heat transfer conduit for a tire, particularly in an axial, or substantially axial, internal direction within the tire, is considered to be a significant departure from past practice even though such conduit would be desirable once the concept is presented. Therefore such concept is considered to be not readily thought of by one having ordinary skill in the pertinent art.

It is appreciated that a difference in temperatures of connecting tire components is a driving force for the heat transfer by the heat transfer conduit. By being connected or joined, it is generally meant that the individual tire components are joined in a manner sufficient to promote an interfacial heat transfer between the tire components.

Historically, acetylene carbon black has been proposed to promote heat conductivity for rubber compositions including rubber compositions for one or more portions of a tire. However, acetylene carbon black is normally not considered as being an effective rubber reinforcing carbon black. Therefore, to promote or retain one or more beneficial physical properties for a rubber composition which contains an acetylene carbon black for heat conductivity purposes, a blend of rubber reinforcing carbon black and acetylene carbon black is used. For example, see US-B- 7,337,815.

For this invention, it is desired provide a heat conductive pathway which relies on an individual, or on a plurality of interfacially connected, heat conductive tire rubber components to channel heat within a tire while providing desirable physical properties of the rubber composition(s) for such heat conductive tire component(s). In addition, the heat conductive pathway is intended to not extend to an outer tread running surface of the tire. Desirably, the outer surface to which the heat transfer pathway extends is limited to an outer tire sidewall surface.

Historically, it has heretofore been proposed to provide heat conduction from the interior of a tire by use of carbon nanotubes which are aligned in a parallel or end-to-end configuration with each other within a rubber composition to form a heat conductive path. For example see US-A- 2006/0061011. The use of such carbon nanotechnologies for this invention is undesirable and is to be excluded.

In one embodiment, it is proposed to provide a path of heat conductivity with a tire component comprising a natural rubber rich rubber composition, namely a rubber composition with elastomers comprising at least 50 weight percent natural rubber, and which contains a combination of rubber reinforcing filler comprising rubber reinforcing carbon black and/or silica such as precipitated silica, together with acetylene carbon black.

In another embodiment, it is proposed to provide a path of heat conductivity with a tire component of a synthetic diene-based elastomer rich rubber composition, namely a rubber composition with elastomers comprised of at least 50 weight percent synthetic diene-based elastomer(s), such as for example at least one of polybutadiene rubber (e.g. cis 1,4-polybudadiene rubber) and styrene/butadiene rubber, with the remainder, if any, being natural cis 1,4-polyisoprene rubber, and which contains a combination of rubber reinforcing filler comprised of rubber reinforcing carbon black and/or precipitated silica, together with acetylene carbon black.

In practice, carbon black is produced by thermal decomposition methods or partial thermal decomposition methods of hydrocarbons such as, for example petroleum oil, coal oil or natural gas as a starting raw material. Characteristics of the resulting carbon black depend largely on the manufacturing process and choice of raw material.

Rubber reinforcing carbon black is primarily manufactured by a furnace process as a most commonly used process and is often referred to as "furnace black". For such furnace process, the carbon black is formed by blowing petroleum oil or coal oil into high-temperature gases to partially combust the oil. Representative rubber reinforcing furnace carbon blacks may be found, for example, in The Vanderbilt Rubber Handbook (1978) Pages 404 through 417.

A more heat conductive carbon black with significantly less rubber reinforcing property is prepared by thermally decomposing acetylene gas. Acetylene carbon black is of a significantly high structure and higher crystallinity than the furnace black and is generally referred to as "acetylene black". A short description of the process may be found in The Vanderbilt Rubber Handbook (1978) Page 411.

In order to provide adequate heat conductivity for the rubber composition of the directional rubber conduit, it is generally considered herein that an acetylene carbon black filler be used in an amount in a range of from 10 to 60, alternately from 15 to 50, parts by weight per 100 parts by weight rubber (phr).

It is considered that an inclusion of acetylene carbon black which acts as an inert filler in a rubber composition rather than a rubber reinforcing carbon black and can thereby tend to dilute one or more of desirable physical properties of the rubber in which it resides such as, for example, one or more of tear resistance, sometimes referred to as tear strength, and low strain modulus.

Therefore, it is desired to evaluate building into the associated rubber composition containing the acetylene carbon black one or more desirable physical properties such as, for example, tear resistance and low strain modulus properties.

Accordingly, in one embodiment, it is desired to evaluate an effect of promoting particulate reinforcement of the rubber composition which contains the acetylene carbon black by an addition of at least one of rubber reinforcing carbon black (furnace black) and synthetic amorphous silica (precipitated silica) together with a coupling agent for the precipitated silica having limited sulfur linkages.

In one aspect, is desired to evaluate an effect addition of a cis 1,4-polybutadiene rubber characterized by a relatively wide heterogeneity index (Mn/Mw) in a range of 2.1/1 to 4.5/1 and therefore exhibiting a degree of branching, to a natural rubber containing rubber composition, in combination with the aforesaid acetylene carbon black and particulate reinforcement comprised of at least one of precipitated silica (with coupling agent) and rubber reinforcing carbon black.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated.

DE-A-10 2004 036 517 describes a pneumatic tire in accordance with the preamble of claim 1.

### Summary and Practice of the Invention

The invention relates to a tire in accordance with claim 1.

Dependent claims refer to preferred embodiments of the invention.

In accordance with this invention a pneumatic tire is provided containing a heat conductive path where said heat conductive path is a heat transfer rubber conduit comprising an individual, or a plurality of interfacially connected heat conductive rubber tire components (rubber components joined together to enable heat transfer between the rubber components);
wherein the rubber composition(s) of said heat conductive tire component(s) each contain from 10 to 60, alternately 10 to 50 (depending somewhat upon the degree or rate of heat transfer desired) parts by weight acetylene carbon black per 100 parts by weight rubber (phr) contained in a said tire component.

Such heat transfer conduit is provided to transfer heat between an internal portion of the tire and an external tire surface, wherein said heat conductive tire components contain acetylene carbon black to promote such heat conduction, particularly where said external tire surface is exclusive of tire's running surface (e.g. the tire tread's running surface) and where said external tire surface is desirably a tire sidewall outer surface.

Therefore, such heat transfer rubber conduit may be provided to conduct internally generated heat from within a cured rubber tire to a tire's outer surface (e.g. tire sidewall outer surface) for dissipation of the conducted heat from the tread outer surface and alternately, for an uncured rubber tire, to conduct heat from an external tire surface to a tire's internal portion to aid in curing internal rubber components of the tire.

Therefore, such heat transfer rubber conduit may conduct externally applied heat from an outer surface of a tire sidewall of an uncured rubber tire to an internal portion of the tire to aid in curing the tire.

In one embodiment, such heat transfer rubber conduit may conduct internally generated heat from an associated cured tire component which joins at least one heat conductive tire component of said heat transfer conduit and which does not contain acetylene carbon black (or, alternatively, contains less than 6 phr of acetylene carbon black).

In practice, heat conductivity of said heat conductive rubber components is promoted by (heat conductive) acetylene carbon black filler contained in their rubber composition.

Representative of such operational heat conductive tire components for said heat transfer rubber conduit which are considered to be physically operational during the running of the tire (during tire service) are, for example, one or more of tire tread base rubber layer which is not intended to be ground contacting, outer tire sidewall, tire shoulder wedge (tire rubber component positioned in the tire shoulder region), tire chafer (cord reinforced tire rubber component positioned in the tire bead region intended for contacting a rigid wheel rim onto which the tire is to be mounted) , a belt wedge, (which might be referred to as a belt cushion, as a non cord-reinforced tire rubber component positioned between two circumferential cord reinforced rubber belts where the tread belts are positioned between the tire tread and tire carcass), and apex (a tire rubber component positioned internally within the tire sidewall and extending radially outward from a tire bead). Such tire components are well known to those having skill in such art

In one embodiment, at least one of said heat conductive tire components is a tread base rubber layer which underlies an outer tread cap rubber layer configured with lugs with an outer surface containing a running surface of said tire tread together with intervening grooves between said lugs, wherein a portion of said tread base rubber layer extends radially outward into said outer tread cap rubber layer and to a surface of at least one of said tread grooves exclusive of the running surface of said tread lugs.

Representative of such associated tire rubber components to an extent that they are not heat conductive rubber components included in the heat transfer conduit and therefore do not contain an effective content of the acetylene carbon black, if any, particularly when exclusive of acetylene carbon black, may be, for example, an outer tread cap rubber layer intended to be ground contacting, rubber cushion layer (underlying the tire tread), belt coat compounds, and ply coat compounds.

In practice, such heat conductive rubber components of said heat transfer rubber conduit are exclusive of rubber (including thin rubber strips) extending from a tire tread base rubber layer or rubber tire carcass to an outer tire running surface (tread surface intended to be road contacting). It is desirable for the heat transfer conduit to transfer the heat in a substantially axial direction from or to the internal portion of the tire to or from an outer surface of a tire sidewall because, for this invention, tire components for said heat transfer conduit are limited to operational tire components exclusive of thin rubber strips, particularly exclusive of thin rubber strips which extend radially outward from within the tire to a running surface of the tire.

In further accordance with this invention, a pneumatic tire is provided having a circumferential rubber tread containing an outer running surface (surface intended to be road contacting), a carcass comprised of a pair of spaced apart beads, cord reinforced rubber plies extending from each of said spaced apart beads through the crown of the tire and a pair of outer rubber sidewalls extending from said beads to a periphery of the tire tread, wherein a heat conductive pathway is provided in a form of a heat conductive rubber conduit comprised of an individual or plurality of connected (interfacially joined) heat conductive rubber components of rubber compositions comprised of at least one conjugated diene based elastomer which extends axially outward from an inner portion of the tire:
(A) to and including an outer surface of said outer sidewall rubber layer, or
(B) to an outer sidewall rubber layer exclusive of its outer surface, wherein said rubber conduit and said outer sidewall rubber layer contain:
(C) 10 to 60, alternately from 10 to 50, phr of acetylene carbon black, and
(D) a reinforcing filler in a range of from 1 to 60, alternately 5 to 25, and alternately from 35 to 60, phr (depending somewhat upon the tire component and amount of reinforcement desired for the tire component) comprising:
   (1) a rubber reinforcing carbon black, or
   (2) a combination of a rubber reinforcing carbon black and silica or precipitated silica (amorphous synthetic silica) together with coupling agent for the silica having a moiety reactive with hydroxyl groups (e.g. silanol groups) on the silica and another different moiety interactive with said diene-based elastomer(s).

In one embodiment, the weight ratio of said acetylene carbon black to said reinforcing filler is in a ratio of from 1/6 to 4/1.

In practice, said acetylene carbon black is preferably a product of combustion of acetylene and has preferably a DBP (dibutylphthalate) value (ASTM D 2414) in a range of from 185 to 220 cc/100g together with an Iodine value (ASTM D1510) in a range of from 80 to 95 g/kg;

In practice, said rubber reinforcing carbon black preferably has a DBP value (ASTM D2414) in a range of from 50 to 135 cc/100g together with an Iodine value (ASTM D1510) in a range of from 15 to 210 g/kg.

The rubber component(s) of said heat transfer rubber conduit is composed of diene-based elastomers comprising natural cis 1,4-polyisoprene rubber and at least one of cis 1,4-polybutadiene rubber and styrene/butadiene rubber, (and therefore is desirably exclusive of butyl rubber) wherein said cis 1,4-polybutadiene rubber desirably has a cis 1,4 isomeric content of at least 95 percent and a heterogeneity ratio (Mn/Mw) in a range of from 2/1 to 4.5/1.

In one embodiment, said outer sidewall rubber is composed of diene-based elastomers comprising at least one of cis 1,4-polybutadiene rubber, cis 1,4-polyisoprene rubber and styrene/butadiene rubber, preferably including said cis 1,4-polyisoprene rubber, (and therefore is preferably exclusive of butyl rubber) and where said cis 1,4-polybutadiene rubber desirably has a cis 1,4 isomeric content of at least 95 percent and a heterogeneity ratio (Mn/Mw) in a range of from 2/1 to 4.5/1.

As indicated, the heat transfer rubber conduit pathway extends in a substantially axial direction from or to the interior of the tire and does not extend radially outward from the interior of the tire into the tread outer cap rubber layer and particularly to the tire tread's running surface (and therefore is exclusive of the tire tread's outer, running, surface).

In one embodiment, the silica coupler for the silica or precipitated silica comprises a bis(3-trialkoxysilylalkyl) polysulfide (e.g. bis(3-triethoxysilylpropyl) polysulfide) having an average of from 2 to 4, alternately from 2 to 2.6 connecting sulfur atoms in its polysulfidic bridge or comprises an organoalkoxymercaptosilane, desirably comprises said bis(3-triethoxysilylpropyl) polysulfide having an average of from 2 to 2.6 connecting sulfur atoms in its polysulfidic bridge.

In one embodiment, the precipitated silica is provided as a reaction product of the silica or precipitated silica with said silica coupler in situ within said rubber composition or is provided as a composite of the silica pre-reacted with said silica coupler prior to addition to the rubber composition or is provided as a combination thereof.

In one embodiment, the cis 1,4-polybutadiene rubber is:
(A) a first cis 1,4-polybutadiene rubber having a microstructure comprising from 90 to 99 percent cis 1,4-isomeric units, a number average molecular weight (Mn) in a range of from 120,000 to 300,000 and a heterogeneity index (Mw/Mn) in a range of from 2.1/1 to 4.5/1 (a relatively high heterogeneity index range illustrating a significant disparity between its number average and weight average molecular weights), instead of
(B) a second cis 1,4-polybutadiene rubber having a microstructure comprising from 96 to 99 percent cis 1,4-isomeric units, a number average molecular weight (Mn) in a range of from 150,000 to 300,000 and a heterogeneity index (Mw/Mn) in a range of from 1.5/1 to 2/1 (a relatively moderate heterogeneity index range illustrating a moderate disparity between its number average and weight average molecular weights).

Said first cis 1,4-polybutadiene rubber may be the product of a nickel catalyst promoted polymerization of 1,3-butadiene monomer in an organic solvent solution such as, for example polymerization of 1,3-polybutadiene monomer in an organic solvent solution in the presence of a catalyst system as described in US-A-5,451,646 which is based on polymerization of 1,3-butadiene monomer with a catalyst system comprised of, for example, a combination of an organonickel compound (e.g. nickel salt of a carboxylic acid), organoaluminum compound (e.g. trialkylaluminum) and fluoride containing compound (e.g. hydrogen fluoride or complex thereof).

Said second cis 1,4-polybutadiene rubber may be the product of a neodymium catalyst promoted polymerization of 1,3-butadiene monomer in an organic solvent such as, for example, polymerization of 1,3-butadiene monomer in an organic solvent solution in the presence of a catalyst system comprised of, for example, organoaluminum compound, organometallic compound such as for example neodymium, and labile (e.g. vinyl) halide described in, for example, US-A-4,663,405.

A significant aspect of the invention is providing the positional placement of the acetylene carbon black-containing heat transfer rubber conduit within the tire to form a pathway for thermally conducting heat from within the tire axially outward to an outer surface of an outer sidewall rubber layer or to the outer sidewall rubber layer to allow the conducted heat to dissipate from the tire sidewall's outer surface.

In one embodiment, such placement of the heat transfer rubber conduit is within or adjacent to as being a part of, or as being joined to, the thickest portion of the tire, namely the thickest gauge of the tire, which can be a highest heat generating portion of the tire and, also, a significant heat sink for internal heat storage within the tire. Such thick gauge portion of a tire is often its shoulder portion, (or shoulder region), of the tire. Therefore, in one embodiment, it is desired for the heat transfer conduit to contain at least one heat conductive tire component composed of a thick tire cross section or is adjacent to (in an interfacial contact with) such thick tire cross section, or region.

By transferring heat from the area of thickest gauge of a cured tire and dissipating it externally from an outside surface of the tire (e.g. an outer sidewall surface), a lower tire operating temperature is promoted to thereby promote an increased endurance of the tire during service. In addition, since the heat transfer conduit can be bi-directional for heat transfer purposes, heat can be conducted from an outer surface of an uncured tire (e.g. an outer sidewall surface) to an internal portion, or tire component, of tire with thickest gauge to promote overall tire cure time reduction and thereby promote a beneficially increased rate of tire production.

Drawings are provided for a further understanding of the invention.

### Brief Description of the Drawings

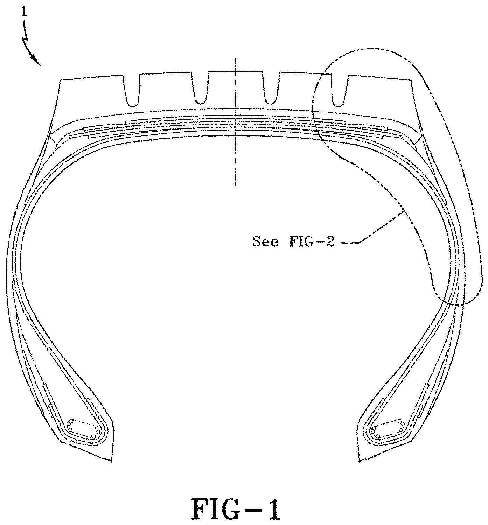

Drawings are presented (Figures 1 through 8) to illustrate cross sections of pneumatic tires with positional heat conductive element(s), or conduit(s) extending from an internal portion of the tire to an outer surface of the tire for conduction of heat from the internal portion of the tire and dissipation of the conducted heat from an outer sidewall surface.

For the drawings, a focused and directive heat transfer rubber conduit is provided to conduct internally generated heat directionally from the internal portion of the tire to an outer surface of the tire exclusive of the tire tread running surface. In one embodiment, a sequential combination of such inner rubber conduit positioned together with an outer sidewall rubber layer is depicted.

The internal rubber conduit and outer sidewall rubber layer rubber compositions contain 10 to 60, alternately from 10 to 50, phr of acetylene carbon black and contain rubber reinforcement comprised of at least one of rubber reinforcing furnace carbon black and precipitated silica, where a coupling agent is used in combination with the precipitated silica comprised of a bis(3-triethoxysilylpropyl) polysulfide containing an average of from 2 to 2.6 connecting sulfur atoms in its polysulfidic bridge.

In one embodiment, at least one of the tire components of the teat transfer rubber conduit and outer sidewall rubber layer rubber compositions contain a cis 1,4-polybutadiene rubber with a heterogeneity index is in a range of from 2.1/1 to 4.5/1.

For the Drawings, the weight ratio of said acetylene carbon black to said reinforcing filler is in a range of from 1/2 to 4/1 and, as indicated, the acetylene carbon black content of the rubber compositions is in a range of from 10 to 60 phr.

### The Drawings

Figure 1 (FIG 1) illustrates a cross section of a pneumatic tire 1.
Figure 2 (FIG 2) illustrates a portion of the tire 1 containing a circumferential outer tread cap rubber layer 2 with its grooved running surface 6, a circumferential tread base rubber layer 3 which underlies the said tread cap rubber layer 2, an annular outer sidewall rubber layer 4 which extends radially outward along the periphery of the outer tread cap rubber layer 2 to its running surface and an internal belt end rubber wedge 6.

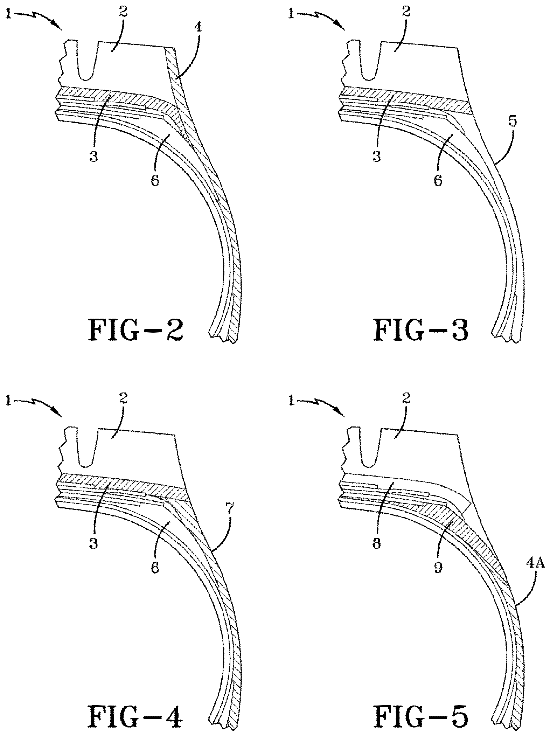

FIG 2 depicts a configuration of the tire where a directional heat conductive path is provided by an acetylene carbon black containing heat conductive tread base rubber layer 3 as a heat transfer conduit which extends axially outward from an internal portion of the tire to and joins an acetylene carbon black containing heat conductive outer sidewall rubber layer 4 to thereby provide a path of heat conductivity from an interior of the tire to the outer surface of the sidewall outer rubber layer 4 from which the directionally conducted heat is dissipated.

In this manner, the heat transfer conduit is composed of a sequential combination of tire components composed of a natural rubber containing tread base rubber layer 3 connected to the outer sidewall rubber layer 4 to present a combination of directional conduction of internally generated heat from within the tire and to its dissipation from the sidewall.

Heat conductivity of the tread base rubber layer 3 and connected outer sidewall rubber layer 4 is provided by the aforesaid acetylene carbon black dispersions contained in both of their rubber compositions which also contain the aforesaid particulate reinforcing filler comprised of at least one of rubber reinforcing carbon black and precipitated silica together with the silica coupling agent for the precipitated silica.

Figure 3 (FIG 3) depicts a configuration of a tire which is similar to FIG 2 except that:
(A) the thermally conductive rubber conduit in a form of the said acetylene carbon black-containing heat conductive tread base rubber layer 3 extends directionally axially outward to the outer surface of the acetylene carbon black-containing heart conductive rubber sidewall in a manner for the conducted heat to dissipate from the rubber conduit itself and,
(B) the outer sidewall rubber layer does not extend radially outward to the running surface of the tread cap rubber layer.

Figure 4 (FIG 4) depicts a configuration of a tire which is similar to FIG 2 except that the acetylene carbon black-containing heat conductive tread base rubber layer 3 is a heat transfer conduit which extends radially outward directly to the outer surface of sidewall rubber layer 7 to thereby provide a path of heat conductivity from an interior of the tire to the outer surface of the acetylene carbon black-containing heat conductive sidewall outer rubber layer 7 from which the conducted heat is dissipated from both of the exposed tread base rubber layer 3 and the connecting tire outer sidewall rubber layer 7.

In this manner, the heat transfer conduit is composed of a natural rubber based tread base rubber layer 3 to promote directional conduction of internally generated heat from within the tire to an eventual dissipation of the conducted heat from the sidewall exposed surface as well as the connected outer sidewall rubber layer 7.

Figure 5 (FIG 5) is somewhat similar to FIG 2 except that its heat conductive path is provided by the acetylene carbon black-containing heat conductive internal rubber wedge 9 as a heat transfer conduit which extends radially outward directly to the outer surface of the sidewall to thereby provide a path of heat conductivity from an interior of the tire to the outer surface of the acetylene carbon black-containing heat conductive sidewall from which the conducted heat is dissipated from the exposed rubber wedge 9.

As indicated, heat conductivity of the rubber wedge 9 is provided by an acetylene carbon black dispersion contained in rubber composition.

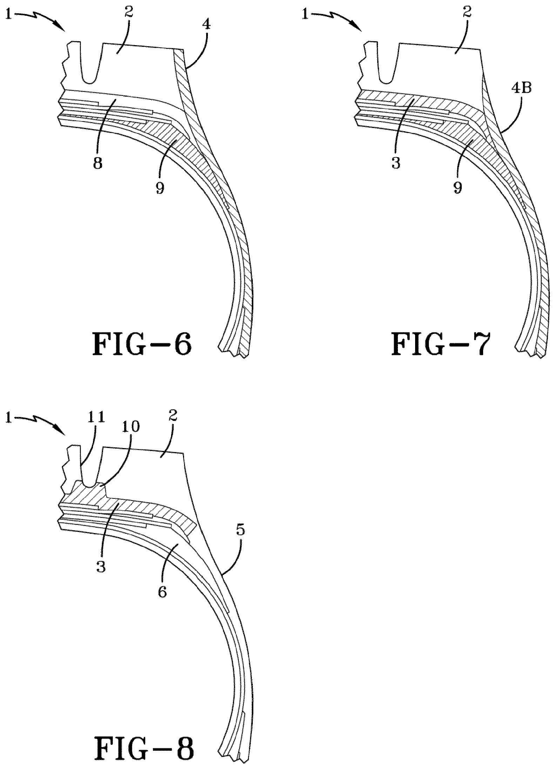

Figure 6 (FIG 6) is somewhat similar to FIG 5 except that its heat conductive path is provided by the rubber wedge 9 as a heat transfer conduit which extends axially outward to join the sidewall outer rubber layer 4 to thereby provide a path of heat conductivity from an interior of the tire to the outer surface of the sidewall 4 from which the conducted heat is dissipated from both of the exposed internal rubber wedge 9 and sidewall outer rubber layer 4.

In this manner, the heat transfer conduit is provided to promote conduction of internally generated heat from within the tire to an ultimate a dissipation of the conducted heat from an exposed surface of the sidewall outer rubber layer 4.

In one embodiment at least one of the rubber wedge 9 and sidewall outer rubber layer 4B contains a cis 1,4-polybutadiene rubber with a heterogeneity index in a range of from 2/1 to 4.5/1.

Figure 7 (FIG 7) is similar to FIG 6 except that its heat conductive path is provided by the acetylene carbon black-containing heat conductive rubber wedge 9 as a heat conductive conduit which extends radially outward to join the acetylene carbon black-containing heat conductive sidewall outer rubber layer 4B to thereby provide a path of heat conductivity from an interior of the tire to the outer surface of the sidewall 4 from which the conducted heat is dissipated from both of the exposed rubber wedge 9 and sidewall outer rubber layer 4B.

In this manner, the heat transfer conduit is composed of the rubber wedge 9 in combination with the sidewall outer rubber layer to promote conduction of internally generated heat from within the tire to an eventual dissipation of the conducted heat from an exposed surface of the sidewall outer rubber layer 4B.

As indicated, heat conductivity of the rubber wedge 9 and sidewall outer rubber layer 4B is provided by an acetylene carbon black dispersion contained in their rubber compositions.

As indicated, in one embodiment at least one of the rubber wedge 9 and sidewall outer rubber layer 4B contains a cis 1,4-polybutadiene rubber with a heterogeneity index in a range of from 2.1/1 to 4.5/1.

For Figure 8 (FIG 8), in one embodiment, a heat transfer conduit is provided for the tire comprised of an acetylene black-containing heat conductive tread base rubber layer 3 illustrated in FIG 7 is provided with an extension 10 as an extension of the tread base rubber layer 3 radially outward into the tread cap rubber layer 2 to an external surface 11 of a tread groove contained in the tread cap rubber layer 2 for which the tread base rubber layer extension 10 is exclusive of a running surface of the tread cap rubber layer 2. In this manner, the tread base rubber layer 3 with its extension 10 is, or is a portion of, a tire component of a heat transfer conduit which can rely upon its inclusion of a portion of the surface 10 of the tread groove to dissipate conducted heat in the case of a cured rubber tire or to receive heat from a tire mold surface for heat conduction into an uncured rubber tire. For such embodiment, the tread base rubber layer 3 may optionally also extend to an outer surface of a tire sidewall in a manner shown in FIG 7. While, in FIG 7, the tread base rubber layer 3 is illustrated as terminating within the tire, it is to be understood that it may, if desired, extend to the tire sidewall outer rubber layer 4 or may extend to and include an outer surface of the tire sidewall.

The following Examples are provided to further illustrate the invention with parts and percentages presented in units of weight unless otherwise indicated.

### EXAMPLE I

Rubber compositions were prepared to evaluate use of an acetylene carbon black for heat conduction.

For this Example, FIG 7 is envisioned where it can be seen that three tire components have been modified to contain acetylene carbon black and thereby employed to provide a thermally conductive path in a form of a heat transfer conduit composed of interfacially connecting heat conductive tire components.

For this Example, exemplary control rubber compositions, or Samples, C are prepared and provided containing rubber reinforcing carbon black and without containing acetylene carbon black.

Experimental Control Rubber Samples, identified as Experimental Rubber Samples 1 and 3 were prepared with an inclusion of acetylene carbon black.

An Experimental Rubber Sample, identified as Experimental Rubber Sample 2, was prepared with an inclusion of acetylene carbon black and natural rubber and synthetic butadiene.

The basic formulation for the rubber Samples is illustrated in the following Table 1 where the ingredients are expressed in terms of parts by weight per 100 parts of rubber (phr) unless otherwise indicated.

**Table 1**

| Non-Productive Mixing Step (NP1). Mixed to 160°C | Parts (phr) |
|---|---|
| Natural cis 1,4-polyisoprene rubber¹ | 50 and 100 |
| Synthetic butadiene rubber² | 0 and 50 |
| Synthetic butadiene rubber highly branched³ | 0 and 50 |
| Carbon black, rubber reinforcing (N)⁴ | 25 to 60 |
| Precipitated silica⁵ | 5 to 14 such as 5, 8, 10, 13.37 |
| Silica coupling agent⁶ | 0 or 2 |
| Acetylene carbon black⁷ | 20 to 40 such as 20, 34.75, 28, 34, 35, 45 |
| Wax, microcrystalline and paraffin | 2 |
| Fatty acid⁸ | 2 |
| Antioxidant(s) | 5 |
| Zinc oxide | 4 |

| Productive Mixing Step (PR), Mixed to 110°C | |
|---|---|
| Sulfur | 3 |
| Accelerator(s)⁹ | 1.15 |

| | |
|---|---|
| ¹Natural cis 1,4-polyisoprene rubber as SMR-20 ²Synthetic linear cis 1,4-polybutadiene prepared by nickel catalysis having a cis 1,4-isomeric content of at least about 96 percent and a heterogeneity index of about 3.5/1 as Bud1207 from The Goodyear Tire & Rubber Company ³Synthetic cis 1,4- polybutadiene having a cis 1,4- isomeric content of at least about 96 percent and a heterogeneity index of about 4.1. ⁴Rubber reinforcing carbon black as N-550, an ASTM designation ⁵Precipated silica as PPG Hi-Sil 8210 ⁶Silica coupling agent as Degussa SI 266 ⁷Acetylene carbon black as ACE™ acetylene black from Soltex ⁸Mixture of fatty acids comprised of stearic, palmitic and oleic acids ⁹Sulfenamide and diphenyl guanidine sulfur cure accelerators | |

The following Table 2 represents the uncured and cured behavior and various physical properties of the rubber compositions based upon the basic formulation of Table 1, and reported for Experimental Control Rubber Samples 1 and 3 (labeled Comp. 1 and 3), associated Control Rubber Samples C and Experimental Rubber Sample 2.

**Table 2**

| | Comp. 1 (phr) | | Comp. 2 (phr) | | Comp. 3 (phr) | |
|---|---|---|---|---|---|---|
| | C | 1 | C | 2 | C | 3 |
| Natural cis 1,4-polyisoprene | 100 | 100 | 50 | 50 | 100 | 100 |
| Synthetic butadiene | 0 | 0 | 50 | 0 | 0 | 0 |
| Synthetic butadiene branched | 0 | 0 | 0 | 50 | 0 | 0 |
| Acetylene carbon black | 0 | 35 | 0 | 37 | 0 | 31 |
| Rubber reinforcing carbon black | 35 | 0 | 45 | 0 | 34 | 0 |
| Precipitated silica | 10 | 13.37 | 0 | 8 | 5 | 5 |
| | | | | | | |

| Properties | | | | | | |
|---|---|---|---|---|---|---|
| MDR test: 60 minutes at 150°C | | | | | | |
| Maximum torque (dN-m) | 18.79 | 22.55 | 12.84 | 12.43 | 12.45 | 13.21 |
| Minimum torque (dN-m) | 1.85 | 1.83 | 2.35 | 2.26 | 2.42 | 2.37 |
| T90 (minutes) | 9.65 | 12.39 | 12 | 18.29 | 8.77 | 13.19 |
| | | | | | | |
| RPA test (Rubber Process Analyzer) at 10% strain. 11 Hertz. 100°C | | | | | | |
| Storage modulus G' (MPa) | 1.289 | 1.387 | 0.987 | 0.943 | 1.016 | 1 |
| Tan delta | 0.075 | 0.051 | 0.11 | 0.101 | 0.044 | 0.045 |
| | | | | | | |
| Stress-strain | | | | | | |
| Tensile strength (MPa) | 21.19 | 20.6 | 15.59 | 18.93 | 18.835 | 18.8 |
| Elongation at break (%) | 454 | 534 | 678 | 606 | 532.5 | 567 |
| 300% modulus, ring, (MPa) | 13.275 | 10 | 5.43 | 7.3 | 8.1025 7.34 | |
| Energy to break (Joules) | 101.5 | 116.3 | 103 | 115 | 87.8 | 96.6 |
| | | | | | | |
| Rebound (Zwick) | | | | | | |
| 23°C | 50 | 53.8 | 50.1 | 52.4 | 63.6 | 60.9 |
| 100°C | 73.71 | 76.69 | 60.7 | 63.61 | 80.13 | 79.31 |
| | | | | | | |
| Shore A Hardness | | | | | | |
| 23°C | 62 | 61 | 53 | 57 | 49 | 54 |
| 100°C | 57 | 56 | 47 | 51 | 48 | 51 |
| | | | | | | |
| Thermal conductivity (W/m/K)¹ (higher is better) | 0.202 | 0.273 | 0.227 | 0.303 | 0.208 | 0.253 |

| | | | | | | |
|---|---|---|---|---|---|---|
| ¹Thermal conductivity measured by a Hot Disk Thermal Conductivity Analyzer, Hot Disk TPS 2500, with Probe Type 5501. The test was conducted at 100°C temperature. The thermal conductivity unit i s expressed as Watts/meter/Kelvin degrees temperature. | | | | | | |

It can be seen from Table 2 that the thermal conductivity of the each Experimental compound (rubber compositions 1, 2 and 3 containing the acetylene carbon black) is improved by at least 20 percent as compared their individual Control rubber compositions without an inclusion of acetylene carbon black and without using carbon nanotubes or graphene. In addition the heat generation of each compound as measured by tan delta at 10 percent strain is seen to be maintained or improved for each Experimental compound (rubber composition). Moreover for all three of the Experimental compounds the energy to break, which is an indicator of compound's endurance in a sense of resistance to mechanical failure, is equal or better than its associated control rubber compound (associated Control Samples C).

This is considered herein to be significant in a sense that a significant increase in thermal conductivity is achieved while substantially maintaining the compound's hysteresis (e,g. indicative of maintaining the tire's internal heat generation during service), and other various indicated physical properties., particularly for heavy tire use applications where tire internal heat generation is a consideration.

It can further be seen from Table 2 that it is possible to create a heat transfer conduit of at least one tire component, and particularly of connecting plurality of tire components using thermally conductive compounds (rubber compositions) as the tire components as illustrated and envisioned in FIGs.1 through 7 of the drawings.

Experimental tires were built with the illustrated configuration of FIG 7 with the experimental rubber Samples 1, 2 and 3 of this Example positioned in the tire configuration as connected tread base rubber layer 3, tire sidewall outer layer 4B and shoulder wedge 9, respectively and the tires inserted to a heated tire mold with an inflated heated tire cure bladder positioned inside of the tire for tire curing purposes. Thermocouples (temperature sensing elements) were inserted into the uncured tire to measure changes, and rates of changes of tire temperatures and, thereby an indication of rate of heat transfer from an outer surface of the tire in contact with a heated mold surface or inner surface of the tire in contact with an inflated heated tire cure bladder, to the tire's interior. The cure times are the times to reach suitable extent of cure by monitoring the thermocouple indicated temperature changes within the tire. Therefore, the cure times are reported in the following Table 3 are times to reach a state of cure for the respective tire component. The comparative times to reach equivalent cures for the respective tire components for the Experimental tires and associated Control tires are reported in Table 3 with the cure time for the Control tires normalized to a value of 100. From results reported in Table 3 it is concluded that by providing the pathway for transferring heat within a tire in a form of an internal heat transfer rubber conduit composed of connected substantive heat conductive tire components from an outer surface of the tire (from a heated mold surface and/or heated internal tire cure bladder surface) to a tires thickest gauge (e.g. tire shoulder region) an overall reduction of a tire's cure time can be achieved.

**Table 3**

| Cure Time of Tire Component Based on Control Tire and Experimental Tire | | | |
|---|---|---|---|
| | Comparative Cure Times | | |
| | Outer Tire Sidewall | Shoulder Wedge | Tread Base Rubber |
| Layer | | | |
| Control Tire Components¹ | 100 | 100 | 100 |
| Experimental Tire Components | 91 | 86 | 91 |

| | | | |
|---|---|---|---|
| ¹The values for the Control Tire component cure times are normalized to a value of 100 and the values for the Experimental Tire components are compared to the normalized Control Tire cure times. | | | |

It can be seen from Table 3 that a beneficially average reduced time to reach equivalent states of cure of 10 percent was obtained for the Experimental tire containing the pathway for transferring heat within the tire in a form of an internal heat transfer rubber conduit composed of the connected substantive heat conductive tire components.

A large diameter fly wheel test was performed on the inflated Control and Experimental Tires to evaluate their durability. For the test, the inflated tires were .run (rotated) by pressing them against the rotating fly wheel. The time for the test run to tire failure is reported in the following Table 4 with the time for the Control tire normalized to a value of 100 with the time to failure for the Experimental tire compared to the normalized Control tire time.

**Table 4**

| Tire Endurance Test - Comparative Time to Tire Failure | |
|---|---|
| Control Tire¹ | 100 |
| Experimental Tire | 209 |

It is concluded that Experimental tire built with the configuration of FIG 7 with the pathway of heat transfer conduit composed of the indicated heat conductive tire components using thermally conductive compounds reported in Table 2 provided a significant durability improvement for the Experimental tire.

### EXAMPLE II

Rubber compositions (compounds) were prepared to evaluate use of an acetylene carbon black for heat conduction.

For this Example, FIG 3 of the drawings is envisioned where the thermally conductive rubber conduit in a form of the said acetylene carbon black-containing tread base rubber layer (3) which extends directionally axially outward to the outer surface of the rubber sidewall in a manner for the conducted heat to dissipate from the rubber conduit itself and, the outer sidewall rubber layer does not extend radially outward to the running surface of the tread cap rubber layer. Here corresponding control rubber composition for each component is identified as C (shown in Example I) was prepared without containing acetylene carbon black. The experimental formulation can be seen in Table 2 identified as Comp. 2 (2) also shown in Example I.

The basic formulation for the rubber Samples is illustrated in Table 1 (of Example I) where the ingredients are expressed in terms of parts by weight per 100 parts of rubber (phr) unless otherwise indicated. Tires were built in a manner illustrated in FIG 3 with the experimental compound (2) and its comparative Control rubber composition.

The time for the test runs to tire failure is reported in the following Table 5 with the time to failure for the Control Tire normalized to a value of 100 with the time to failure for the Experimental tire compared to the normalized Control tire time

**Table 5**

| Tire Endurance Test - Comparative Time to Tire Failure | |
|---|---|
| Control Tire | 100 |
| Experimental Tire | 200 |

It is concluded that Experimental tires built with the configuration of FIG 3 using a pathway provided by the thermally conductive tread base rubber layer show a significant durability improvement for the Experimental Tire.

## Claims

1. A pneumatic tire containing at least one heat conductive path (3, 4, 7, 9), wherein said heat conductive path is a heat transfer rubber conduit comprising an individual or a plurality of interfacially connected heat conductive rubber tire component(s), wherein said heat transfer conduit extends from an internal portion of the tire to an external tire surface, and wherein said heat conductive rubber tire component(s) each contain 10 to 60 parts by weight of acetylene carbon black per 100 parts by weight of rubber (phr), **characterized in that** the rubber component(s) of said heat transfer rubber conduit is composed of diene-based elastomers comprising natural cis 1,4-polyisoprene rubber and at least one of cis 1,4-polybutadiene rubber and styrene/butadiene rubber, wherein said cis 1,4-polybutadiene rubber has a cis 1,4 isomeric content of at least 95 percent and a heterogeneity ratio (Mn/Mw) in a range of from 2/1 to 4.5/1.

2. The tire of claim 1 wherein said external tire surface is exclusive of the tire tread's running surface and/or wherein said external tire surface is the tire's sidewall outer surface.

3. The tire of claim 1 or 2 wherein said heat conductive tire component(s) comprise at least one of tread base rubber layer, shoulder wedge, 2/3 belt wedge and apex.

4. The tire of at least one of the previous claims wherein at least one of said heat conductive tire components of said heat transfer rubber conduit is a tread base rubber layer which underlies an outer tread cap rubber layer configured with lugs with an outer surface containing a running surface of said tire tread together with intervening grooves between said lugs, wherein a portion of said tread base rubber layer extends radially outward into said outer tread cap rubber layer and to a surface of at least one of said tread grooves exclusive of the running surface of said tread lugs.

5. The tire of at least one of the previous claims wherein at least one of said heat conductive tire components of said heat transfer rubber conduit is joined with at least one tire component which does not contain acetylene carbon black.

6. The tire of at least one of the previous claims 1 to 4 wherein at least one of said heat conductive tire components of said heat transfer rubber conduit is joined with at least one associated tire component which contains less than 6 phr of acetylene carbon black.

7. The tire of at least one of the previous claims wherein said heat conductive tire component of said heat transfer rubber conduit contains from 10 to 60 phr of acetylene carbon black and in a range of from 1 to 60 phr, alternatively from 25 to 60 phr, of a reinforcing filler comprising:
(A) a rubber reinforcing carbon black, or
(B) a combination of a rubber reinforcing carbon black and silica or precipitated silica.

8. The tire of at least one of the previous claims wherein said acetylene carbon black is a product of combustion of acetylene.

9. The tire of at least one of the previous claims wherein said acetylene carbon black has a DBP (dibutylphthalate) value (ASTM D 2414) in a range of from 185 to 220 cc/100g and/or an Iodine value (ASTM D1510) in a range of from 80 to 95 g/kg.

10. The tire of at least one of the previous claims wherein said rubber reinforcing carbon black has a DBP value (ASTM D2414) in a range of from 50 to 135 cc/100g and/or an Iodine value (ASTM D1510) in a range of from 15 to 210 g/kg.

11. The tire of at least one of the previous claims 7 to 10 wherein the weight ratio of said acetylene carbon black to said reinforcing filler is in a ratio of from 1/6 to 4/1, alternatively from 1/3 to 2/1.

12. The tire of at least one of the previous claims 7 to 11 wherein the heat conductive rubber tire component comprises a silica coupler for the silica or precipitated silica comprising a bis(3-triethoxysilylpropyl) polysulfide having an average of from 2 to 4, alternatively from 2 to 2.6 connecting sulfur atoms in its polysulfidic bridge or comprises an organoalkoxymercaptosilane.

## Patentansprüche

1. Luftreifen, umfassend mindestens einen wärmeleitenden Pfad (3, 4, 7, 9), wobei dieser wärmeleitende Pfad ein aus Gummi bestehender Wärmeübertragungskanal ist, umfassend ein einzelnes oder eine Vielzahl von an den Grenzflächen miteinander verbundenen, wärmeleitenden Gummi-Reifenbauteil(en), wobei dieser aus Gummi bestehende Wärmeübertragungskanal sich von einem inneren Teil des Reifens zu einer äußeren Reifenoberfläche erstreckt, und wobei das bzw. die wärmeleitende(n) Gummi-Reifenbauteil(e) jedes 10 bis 60 Gewichtsteile Acetylen-Carbon Black je 100 Gewichtsteile Kautschuk (phr) enthalten, **dadurch gekennzeichnet, dass** das bzw. die Gummi-Bauteil(e) des aus Gummi bestehenden Wärmeübertragungskanals aus dienbasierten Elastomeren zusammengesetzt ist bzw. sind, umfassend natürlichen cis-1,4-Polyisoprenkautschuk und mindestens eines von cis-1,4-Polybutadienkautschuk und Styrol-Butadienkautschuk, wobei der cis-1,4-Polybutadienkautschuk einen cis-1,4-Isomerengehalt von mindestens 95 Prozent und ein Heterogenitätsverhältnis (Mn/Mw) im Bereich von 2:1 bis 4,5:1 aufweist.

2. Reifen nach Anspruch 1, wobei besagte äußere Reifenoberfläche unter Ausschluss der Reifenprofil-Laufoberfläche ist und/oder wobei die äußere Reifenoberfläche die Seitenwand-Außenfläche des Reifens ist.

3. Reifen nach Anspruch 1 oder 2, wobei das bzw. die wärmeleitende(n) Reifenbauteil(e) mindestens eines von Laufflächenunterteil-Kautschuklage, Schulterkeil, 2/3-Gürtelkeil und Kernprofil umfassen.

4. Reifen nach mindestens einem der vorhergehenden Ansprüche, wobei mindestens eines der wärmeleitenden Reifenbauteile des aus Gummi bestehenden Wärmeübertragungskanals eine Laufflächenunterteil-Gummilage ist, die unter einer äußeren Laufflächenoberteil-Gummilage liegt, die mit Stollen mit einer äußeren Oberfläche, die eine Laufoberfläche besagter Reifenlauffläche enthält, zusammen mit dazwischentretenden Rillen zwischen besagten Stollen gestaltet ist, wobei ein Teil der Laufflächenunterteil-Gummilage sich radial auswärts in die äußere Laufflächenoberteil-Gummilage und bis zu einer Oberfläche von mindestens einer der Profilrillen erstreckt, unter Ausschluss der Laufoberfläche der Profilstollen.

5. Reifen nach mindestens einem der vorhergehenden Ansprüche, wobei mindestens eines der wärmeleitenden Reifenbauteile des aus Gummi bestehenden Wärmeübertragungskanals mit mindestens einem Reifenbauteil zusammengefügt ist, das kein Acetylen-Carbon Black enthält.

6. Reifen nach mindestens einem der vorhergehenden Ansprüche 1 bis 4, wobei mindestens eines der wärmeleitenden Reifenbauteile des aus Gummi bestehenden Wärmeübertragungskanals mit mindestens einem zugehörigen Reifenbauteil zusammengefügt ist, das weniger als 6 phr Acetylen-Carbon Black enthält.

7. Reifen nach mindestens einem der vorhergehenden Ansprüche, wobei das wärmeleitende Reifenbauteil des aus Gummi bestehenden Wärmeübertragungskanals 10 bis 60 phr Acetylen-Carbon Black enthält, und in einem Bereich von 1 bis 60 phr, alternativ von 25 bis 60 phr, einen Verstärkungsfüllstoff, umfassend:
(A) ein Kautschukverstärkungs-Carbon Black, oder
(B) eine Kombination eines Kautschukverstärkungs-Carbon Blacks und Silika oder ausgefälltem Silika.

8. Reifen nach mindestens einem der vorhergehenden Ansprüche, wobei das Acetylen-Carbon Black ein Verbrennungsprodukt von Acetylen ist.

9. Reifen nach mindestens einem der vorhergehenden Ansprüche, wobei das Acetylen-Carbon Black einen DBP(Dibutylphthalat)-Wert (ASTM D2414) im Bereich von 185 bis 220 cm³/100g und/oder einen lodwert (ASTM D1510) im Bereich von 80 bis 95 g/kg aufweist.

10. Reifen nach mindestens einem der vorhergehenden Ansprüche, wobei das Kautschukverstärkungs-Carbon Black einen DBP-Wert (ASTM D2414) im Bereich von 50 bis 135 cm³/100g und/oder einen lodwert (ASTM D1510) im Bereich von 15 bis 210 g/kg aufweist.

11. Reifen nach mindestens einem der vorhergehenden Ansprüche 7 bis 10, wobei das Gewichtsverhältnis des Acetylen-Carbon Blacks zu dem Verstärkungsfüllstoff in einem Verhältnis von 1:6 bis 4:1, alternativ von 1:3 bis 2:1, liegt.

12. Reifen nach mindestens einem der vorhergehenden Ansprüche 7 bis 11, wobei das wärmeleitfähige Gummi-Reifenbauteil einen Silika-Haftvermittler für das Silika oder ausgefällte Silika umfasst, umfassend ein bis(3-Ttriethoxysilylpropyl)polysulfid mit einem Durchschnitt von 2 bis 4, alternativ von 2 bis 2,6 verbindenden Schwefelatomen in seiner Polysulfidbrücke, oder ein Organoalkoxymercaptosilan umfasst.

## Revendications

1. Bandage pneumatique comprenant au moins une voie thermoconductrice (3, 4, 7, 9), dans lequel ladite voie thermoconductrice est un conduit en caoutchouc caloporteur comprenant un composant individuel ou plusieurs composants de bandage pneumatique en caoutchouc thermoconducteur reliés à l'interface, ledit conduit caloporteur s'étendant depuis une portion interne du bandage pneumatique jusqu'à une surface externe du bandage pneumatique, et dans lequel ledit ou lesdits composants en caoutchouc thermoconducteur du bandage pneumatique contiennent chacun de 10 à 60 parties en poids de noir de carbone d'acétylène par 100 parties en poids de caoutchouc (phr), **caractérisé en ce que** le ou les composants de caoutchouc dudit conduit en caoutchouc caloporteur se composent d'élastomères à base diénique comprenant du caoutchouc naturel de 1,4-cis-polyisoprène et d'au moins un caoutchouc choisi parmi le caoutchouc de 1,4-cis-polybutadiène et du caoutchouc de styrène/butadiène, dans lequel ledit caoutchouc de 1,4-cis-polybutadiène possède une teneur en isomère 1,4-cis d'au moins 95 % et un indice d'hétérogénéité (Mn/Mw) dans la plage de 2/1 à 4,5/1.

2. Bandage pneumatique selon la revendication 1, dans lequel ladite surface externe du bandage pneumatique ne comprend pas la surface de roulement de la bande de roulement du bandage pneumatique et/ou dans lequel ladite surface externe du bandage pneumatique représente la surface externe du flanc du bandage pneumatique.

3. Bandage pneumatique selon la revendication 1 ou 2, dans lequel ledit ou lesdits composant(s) thermoconducteur(s) du bandage pneumatique comprennent au moins un élément choisi parmi le groupe comprenant une couche de caoutchouc de base de la bande de roulement, un coin d'épaulement, un coin de ceinture 2/3 et un sommet.

4. Bandage pneumatique selon au moins une des revendications précédentes, dans lequel au moins un desdits composants thermoconducteurs du bandage pneumatique dudit conduit en caoutchouc caloporteur représente une couche de caoutchouc de base de bande de roulement qui est sous-jacente à une couche de caoutchouc externe du sommet de la bande de roulement configurée avec des barrettes, une surface externe contenant une surface de roulement de ladite bande de roulement du bandage pneumatique conjointement avec des rainures intercalées entre lesdites barrettes, dans lequel une portion de ladite couche de caoutchouc de base de la bande de roulement s'étend en direction radiale vers l'extérieur jusque dans ladite couche de caoutchouc externe du sommet de la bande de roulement et jusqu'à une surface d'au moins une desdites rainures de la bande de roulement à l'exclusion de la surface de roulement desdites barrettes de bande de roulement.

5. Bandage pneumatique selon au moins une des revendications précédentes, dans lequel au moins un desdits composants thermoconducteurs du bandage pneumatique dudit conduit en caoutchouc caloporteur est joint à au moins un composant de bandage pneumatique qui ne contient pas de noir de carbone d'acétylène.

6. Bandage pneumatique selon au moins une des revendications 1 à 4, dans lequel au moins un desdits composants thermoconducteurs du bandage pneumatique dudit conduit en caoutchouc caloporteur est joint à au moins un composant de bandage pneumatique associé qui contient moins de 6 phr de noir de carbone d'acétylène.

7. Bandage pneumatique selon au moins une des revendications précédentes, dans lequel ledit composant thermoconducteur du bandage pneumatique dudit conduit en caoutchouc caloporteur contient de 10 à 60 phr de noir de carbone d'acétylène et dans la plage de 1 à 60 phr, en variante de 25 à 60 phr, d'une matière de charge pour le renforcement, comprenant :
(A) un noir de carbone pour le renforcement du caoutchouc ; ou
(B) une combinaison d'un noir de carbone pour le renforcement du caoutchouc et de silice ou de silice précipitée.

8. Bandage pneumatique selon au moins une des revendications précédentes, dans lequel ledit noir de carbone d'acétylène est un produit de la combustion de l'acétylène.

9. Bandage pneumatique selon au moins une des revendications précédentes, dans lequel ledit noir de carbone d'acétylène possède une valeur DBP (dibutylphtalate) (norme ASTM D2414) dans la plage de 185 à 220 cm³/100 g et/ou un indice d'iode (norme ASTM D1510) dans la plage de 80 à 95 g/kg.

10. Bandage pneumatique selon au moins une des revendications précédentes, dans lequel ledit noir de carbone pour le renforcement du caoutchouc possède une valeur DBP (norme ASTM D 2414) dans la plage de 50 à 135 cm³/100 g et/ou un indice d'iode (norme ASTM D1510) dans la plage de 15 à 210 g/kg.

11. Bandage pneumatique selon au moins une des revendications 7 à 10, dans lequel le rapport pondéral dudit noir de carbone d'acétylène à ladite matière de charge de renforcement se situe dans le rapport de 1/6 à 4/1, en variante de 1/3 à 2/1.

12. Bandage pneumatique selon au moins une des revendications 7 à 11, dans lequel le composant en caoutchouc thermoconducteur du bandage pneumatique comprend un coupleur de silice pour la silice ou pour la silice précipitée comprenant un bis(3-triéthoxysilylpropyl) polysulfure possédant une moyenne de 2 à 4, en variante de 2 à 2,6 atomes de soufre de liaison dans son pont polysulfure, ou comprend un organoalcoxymercaptosilane.
